# EUROPEAN PATENT APPLICATION

(11) **EP 2 640 130 A1**
(43) Date of publication of application: **18.09.2013**
(21) Application number: 11839132.5
(22) Date of filing: 09.11.2011
(51) Int. Cl.: H04W 48/10

(54) **MOBILE COMMUNICATION SYSTEM AND MOBILE TERMINAL**

(30) Priority: 12.11.2010 JP 2010254318
(71) Applicant: NTT DOCOMO, INC., Chiyoda-ku Tokyo 100-6150 (JP)
(72) Inventor: IWAMURA, Mikio, Tokyo 100-6150 (JP); TAKAHASHI, Hideaki, Tokyo 100-6150 (JP); HAPSARI, Wuri Andarmawanti, Tokyo 100-6150 (JP)
(74) Representative: HOFFMANN EITLE
(86) International application number: PCT/JP2011/075848
(87) International publication number: WO 2012/063873

(57) **Abstract**

A mobile terminal UE according to the present invention is configured to determine whether or not an access is barred, on the basis of an access class (AC) of the mobile terminal UE; which one of "Normal MTC" and "Low Priority MTC" the mobile terminal UE belongs to; which one of a normal state and a roaming state the mobile terminal UE is in; and which one of "ac-Barring For Normal MTC", "ac-Barring For Low Priority MTC", "ac-Barring For Normal MTC-roaming", and "ac-Barring For Low Priority MTC-roaming" is notified.

## Description

### [Technical Field]

The present invention relates to a mobile communication system and a mobile terminal.

### [Background Art]

An LTE (Long Term Evolution) scheme is configured such that an MTC (Machine Type Communication) device, such as a vehicle-mounted type mobile terminal UE (User Equipment) can be used.

### [Citation List]

### [Non Patent Literature]

[NPL 1] 3GPP RP-101026
[NPL 2] 3GPP TS36.331 v9.4.0

### [Summary of Invention]

### [Technical Problem]

However, the conventional LTE scheme has a problem in that no means is prescribed for appropriately barring an access by the MTC device.

Particularly, there is a problem that it is not possible to bar the access with distinguishing an MTC device in a roaming state from an MTC device in a normal state, that is, not in a roaming state.

Thus, the present invention has been achieved in view of the above problem, and an object thereof is to provide a mobile communication system and a mobile terminal, with which it is possible to appropriately bar an access by an MTC device.

### [Solution to Problem]

A first characteristic of the present invention is summarized in that a mobile communication system comprising a mobile terminal and a radio base station, wherein in a subordinate cell, the radio base station is configured to be able to notify, by the broadcast information, first access information for normal state for barring an access by a mobile terminal of a first type that is in a normal state; second access information for normal state for barring an access by a mobile terminal of a second type that is in a normal state; first access information for roaming state for barring an access by a mobile terminal of a first type that is in a roaming state; and second access information for roaming state for barring an access by a mobile terminal of a second type that is in a roaming state, and the mobile terminal is configured to determine whether or not an access is barred, on the basis of an access class of the mobile terminal; which one of the first type and the second type the mobile terminal belongs to; which one of the normal state and the roaming state the mobile terminal is in; and which one of the first access information for normal state, the second access information for normal state, the first access information for roaming state, and the second access information for roaming state is notified.

A second characteristic of the present invention is summarized in that a mobile terminal, wherein the mobile terminal is configured to determine whether or not an access is barred, on the basis of an access class of the mobile terminal; which one of a first type and a second type the mobile terminal belongs to; which one of a normal state and a roaming state the mobile terminal is in; and which one is notified by the broadcast information: first access information for normal state for barring an access by a mobile terminal of a first type that is in a normal state, second access information for normal state for barring an access by a mobile terminal of a second type that is in a normal state, first access information for roaming state for barring an access by a mobile terminal of a first type that is in a roaming state, and second access information for roaming state for barring an access by a mobile terminal of a second type that is in a roaming state.

### [Advantageous Effects of Invention]

As described above, according to the present invention, it is possible to provide a mobile communication system and a mobile terminal, with which it is possible to appropriately bar an access by an MTC device.

### [Brief Description of Drawings]

[Fig. 1] Fig. 1 is a diagram illustrating the entire configuration of a mobile communication system according to a first embodiment of the present invention.
[Fig. 2] Fig. 2 is a functional block diagram of a mobile terminal according to the first embodiment of the present invention.
[Fig. 3] Fig. 3 is a flowchart illustrating an operation of the mobile terminal according to the first embodiment of the present invention.
[Fig. 4] Fig. 4 is a flowchart illustrating an operation of the mobile terminal according to the first embodiment of the present invention.

### [Description of Embodiments]

### (Mobile communication system according to first embodiment of the present invention)

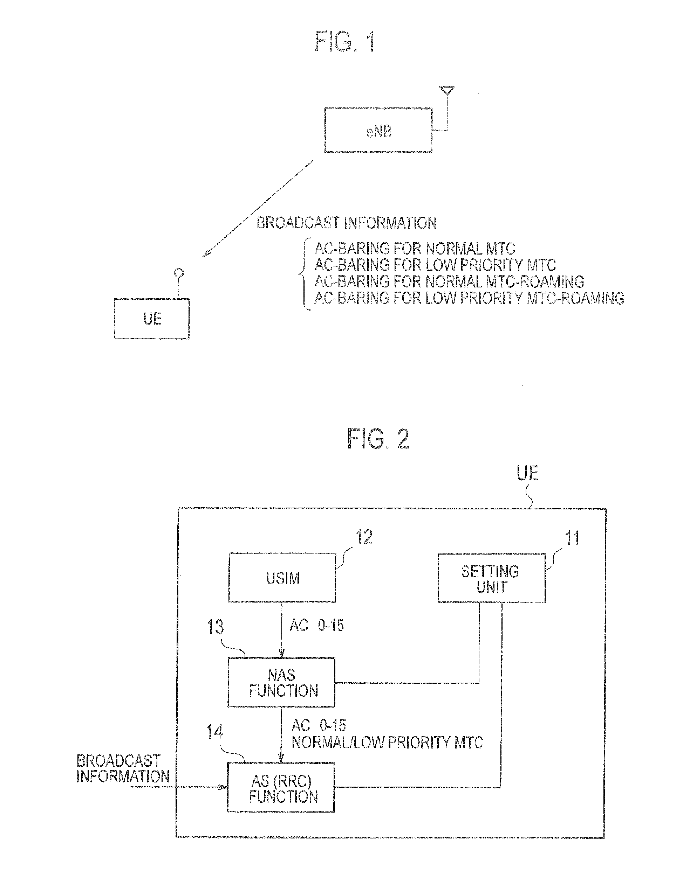

With reference to Fig. 1 and Fig. 2, the configuration of a mobile communication system according to a first embodiment of the present invention will be described.

The mobile communication system according to the present embodiment is an LTE mobile communication system, and includes a radio base station eNB and a mobile terminal UE as illustrated in Fig. 1.

As illustrated in Fig. 1, in a subordinate cell, the radio base station eNB is configured to be able to notify, by the broadcast information, "ac-Barring For Normal MTC" for barring an access by a mobile terminal UE of "Normal MTC" that is in a normal state; "ac-Barring For Low Priority MTC" for barring an access by a mobile terminal UE of "Low Priority MTC" that is in a normal state; "ac-Barring For Normal MTC-roaming" for barring an access by a mobile terminal UE of the "Normal MTC" that is in a roaming state; and "ac-Barring For Low Priority MTC-roaming" for barring an access by a mobile terminal UE of the "Low Priority MTC" that is in a roaming state.

It is noted that similarly to the conventional LTE scheme, in a subordinate cell, the radio base station eNB is also configured to be able to notify, by the broadcast information, "ac-Barring For MO-Data (originating call barring)" and "ac-Barring For MO-Signaling (location registration and Attach Barring)" for barring an access by a normal mobile terminal UE that is not set as an MTC device.

Furthermore, each of the "ac-Barring For Normal MTC", the "ac-Barring For Low Priority MTC", the "ac-Barring For Normal MTC-roaming", and the "ac-Barring For Low Priority MTC-roaming" may include a set of information elements composed of "ac-Barring For Special AC", "ac-Barring Factor", and "ac-Barring Time".

Alternatively, each of the "ac-Barring For Normal MTC", the "ac-Barring For Low Priority MTC", the "ac-Barring For Normal MTC-roaming", and the "ac-Barring For Low Priority MTC-roaming" may include a set composed of the "ac-Barring For Special AC", the "ac-Barring Factor", and the "ac-Barring Time" for an originating call barring, and a set composed of the "ac-Barring For Special AC", the "ac-Barring Factor", and the "ac-Barring Time" for a location registration and Attach Barring.

In addition, the radio base station eNB may be configured to notify, by the broadcast information, a set of information elements composed of the "ac-Barring For Special AC", the "ac-Barring Factor", and the "ac-Barring Time", as well as a flag indicating which one of the "ac-Barring For Normal MTC", the "ac-Barring For Low Priority MTC", the "ac-Barring For Normal MTC-roaming", and the "ac-Barring For Low Priority MTC-roaming" the information elements need to be applied to.

In addition, the radio base station eNB may be configured to notify, by using the broadcast information, a flag indicating whether or not the "ac-Barring For Normal MTC", the "ac-Barring For Low Priority MTC", the "ac-Barring For Normal MTC-roaming", and the "ac-Barring For Low Priority MTC-roaming" are barred completely.

Configuration may be such that when the flag indicating complete barring is not broadcasted, a set of information elements composed of the "ac-Barring For Special AC", the "ac-Barring Factor", and the "ac-Barring Time", which are broadcasted separately, may be applied.

The "ac-Barring For Special AC" is information indicating the mobile terminal UE of any one of the ACs 11 through 15 for which an access must be barred, and, for example, is composed of five bits.

Furthermore, a value in the range of 0 to 100 can be set in the "ac-Barring Factor", and the time for performing an access barring (the set time of a T303 timer or a T305 timer) can be set in the "ac-Barring Time".

As illustrated in Fig. 2, the mobile terminal UE includes a setting unit 11, a USIM (Universal Subscriber Identity Module) 12, a NAS function 13, and an AS (RRC) function 14.

The setting unit 11 is configured to set whether the mobile station UE is an MTC device or a normal mobile terminal UE that is not an MTC device.

Specifically, if the mobile station UE is set as an MTC device, the setting unit 11 is further configured to set whether the mobile station UE belongs to the "Normal MTC" or to the "Low Priority MTC".

The above settings may be made in the manufacturing stage of the mobile terminal UE, or may be made by an OMA-DM (Open Mobile Alliance-Device Manager) protocol, etc.

In the USIM 12, the subscriber information of the mobile terminal UE is set. For example, an access class of the mobile terminal UE is set in the USIM 12. Specifically, any one of AC 0 through 9 is always set in the USIM 12, and in addition, (one or a plurality of) ACs 11 through 15 can be set.

The NAS function 13 is configured to play a role (Attach control, location registration control, originating and terminating control, etc.) of an NAS (Non Access Stratum) layer.

Furthermore, the NAS function 13 may be configured to acquire the access class (AC) saved in the USIM 12, from the USIM 12.

The AS (RRC) function 14 is configured to play a role (radio originating and terminating control, radio resource control, radio measurement control, etc.) of an AS (Access Stratum)/RRC (Radio Resource Control) layer.

Specifically, the AS (RRC) function 14 is configured to acquire type information, from the NAS function 13, indicating which one of the "Normal MTC" and the "Low Priority MTC" the mobile terminal UE belongs to.

Furthermore, the AS (RRC) function 14 may be configured to acquire the access class (AC) saved in the USIM 12, from the USIM 12. Alternatively, the AS (RRC) function 14 may be configured to acquire the access class (AC) from the NAS function 13.

Furthermore, the AS (RRC) function 14 is configured to receive broadcast information transmitted by the radio base station eNB.

For example, the AS (RRC) function 14 is configured to acquire the "ac-Barring For Normal MTC", the "ac-Barring For Low Priority MTC", the "ac-Barring For Normal MTC-roaming", and the "ac-Barring For Low Priority MTC-roaming" that are notified by the broadcast information.

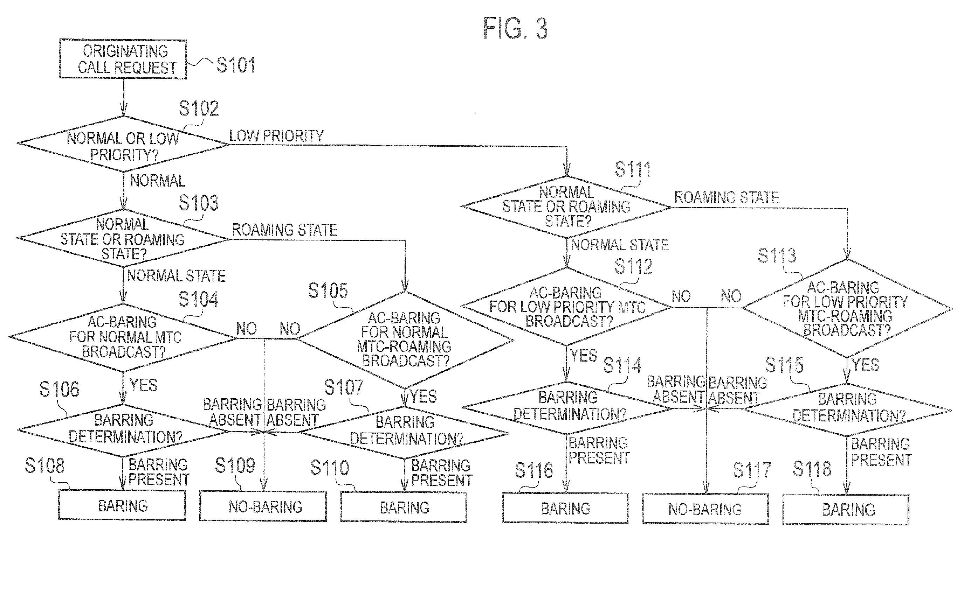

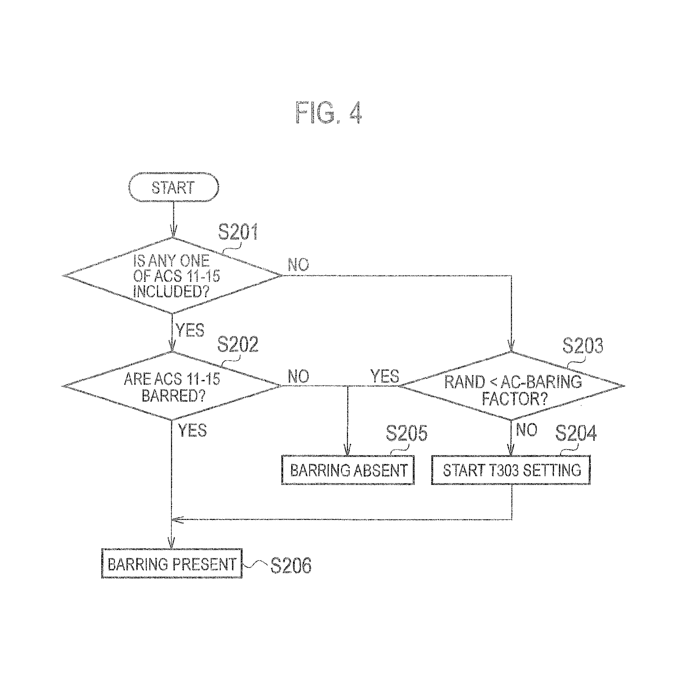

Furthermore, the AS (RRC) function 14 is configured to determine whether or not an access is barred, on the basis of an access class (AC) of the mobile terminal UE; which one of the "Normal MTC" and the "Low Priority MTC" the mobile UE terminal belongs to; which one of the normal state and the roaming state the mobile terminal UE is in; and which one of the "ac-Barring For Normal MTC", the "ac-Barring For Low Priority MTC", the "ac-Barring For Normal MTC-roaming", and the "ac-Barring For Low Priority MTC-roaming" is notified. The determination is described in detail using Fig. 3 and Fig. 4.

With reference to Fig. 3 and Fig. 4, an operation of the mobile terminal UE according to the first embodiment of the present invention, specifically, an example of the above determination operation will be described, below.

As illustrated in Fig. 3, upon detecting in step S101 that an originating call request has occurred, the AS (RRC) function 14 of the mobile terminal UE determines whether the mobile terminal UE is the "Normal MTC" or the "Low Priority MTC", in step S102. It must be noted that in the example illustrated in Fig. 3 and Fig. 4, the mobile terminal UE is set as an MTC device.

Upon determination in step S102 that the mobile terminal UE belongs to "Normal MTC", the AS (RRC) function 14 determines whether or not the mobile terminal UE is in the "normal state" or the "roaming state", in step S103.

In this case, the "normal state" is a state when the mobile terminal UE is registered in HPLMN (Home-Public Land Mobile Network) or EPLMN (Equivalent-PLMN), or a state when it is detected that the identification information of the HPLMN or the EPLMN is included in the received broadcast information, and an outgoing call is tested by selecting either of the two (that is, the state when either the HPLMN or the EPLMN is selected as the "selected PLMN").

On the other hand, the "roaming state" is a state when the mobile terminal UE is not registered in the HPLMN or the EPLMN or a state when it is detected that the identification information of the HPLMN or the EPLMN is not included in the received broadcast information, and an outgoing call is tested by selecting PLMN other than the HPLMN or the EPLMN (that is, the state when PLMN other than the HPLMN or the EPLMN is selected as the "selected PLMN").

Upon determination in step S103 that the mobile terminal UE is in the "normal state", the AS (RRC) function 14 determines whether or not the "ac-Barring for Normal MTC" is notified by the broadcast information, in step S104.

Upon determination in step S104 that the "ac-Barring for Normal MTC" is notified by the broadcast information, the AS (RRC) function 14 performs the barring determination illustrated in Fig. 4, in step S106.

As illustrated in Fig. 4, according to the barring determination, the AS (RRC) function 14 determines whether or not the mobile terminal UE includes any one of ACs 11 through 15, in step S201.

Upon determination in step S201 that the mobile terminal UE includes any one of ACs 11 through 15, the AS (RRC) function 14 determines whether or not an access barring is performed by the "ac-Barring for Normal MTC" for all of the ACs 11 through 15 included in the mobile terminal UE, in step S202.

Upon determination in step S202 that an access barring is performed, the AS (RRC) function 14 determines "Barring present" in step S206.

On the other hand, upon determination in step S201 that the mobile terminal UE does not include any one of ACs 11 through 15, the AS (RRC) function 14 compares a random number rand and the value set in the "ac-Barring Factor" included in the "ac-Barring For Normal MTC", in step S203.

Upon determination in step S203 that the random number rand is smaller than the value set in the "ac-Barring Factor" included in the "ac-Barring For Normal MTC", the AS (RRC) function 14 determines "Barring absent" in step S205.

On the other hand, upon determination in step S203 that the random number rand is equal to or larger than the value set in the "ac-Barring Factor" included in the "ac-Barring For Normal MTC", the AS (RRC) function 14 sets and starts the T303 timer in step S204, and then determines "Barring present" in step S206.

Furthermore, upon determination in step S202 that an access barring is performed, the AS (RRC) function 14 determines "Barring absent" in step S205.

Returning to Fig. 3, upon determination "Barring present" in step S106, the AS (RRC) function 14 determines that the originating call request that occurred in step S101 is barred, in step S108.

On the other hand, upon determination "Barring absent" in step S106, the AS (RRC) function 14 determines that the originating call request that occurred in step S101 is not barred, in step S109.

Furthermore, upon determination in step S104 that the "ac-Barring For Normal MTC" is not notified by the broadcast information, the AS (RRC) function 14 determines that the originating call request that occurred in step S101 is not barred, in step S109.

Upon determination in step S103 that the mobile terminal UE is in the "roaming state", the AS (RRC) function 14 determines whether or not the "ac-Barring For Normal MTC-roaming" is notified by the broadcast information, in step S105.

Upon determination in step S105 that the "ac-Barring For Normal MTC-roaming" is notified by the broadcast information, the AS (RRC) function 14 performs the barring determination illustrated in Fig. 4, in step S107.

As illustrated in Fig. 4, according to the barring determination, the AS (RRC) function 14 determines whether or not the mobile terminal UE includes any one of ACs 11 through 15, in step S201.

Upon determination in step S201 that the mobile terminal UE includes any one of ACs 11 through 15, the AS (RRC) function 14 determines whether or not an access barring is performed by the "ac-Barring for Normal MTC-roaming" for all of the ACs 11 through 15 included in the mobile terminal UE, in step S202.

Upon determination in step S202 that an access barring is performed, the AS (RRC) function 14 determines "Barring present" in step S206.

On the other hand, upon determination in step S201 that the mobile terminal UE does not include any one of ACs 11 through 15, the AS (RRC) function 14 compares a random number rand and the value set in the "ac-Barring Factor" included in the "ac-Barring For Normal MTC-roaming", in step S203.

Upon determination in step S203 that the random number rand is smaller than the value set in the "ac-Barring Factor" included in the "ac-Barring For Normal MTC-roaming", the AS (RRC) function 14 determines "Barring absent" in step S205.

On the other hand, upon determination in step S203 that the random number rand is equal to or larger than the value set in the "ac-Barring Factor" included in the "ac-Barring For Normal MTC-roaming", the AS (RRC) function 14 sets and starts the T303 timer in step S204, and then determines "Barring present" in step S206.

Furthermore, upon determination in step S202 that an access barring is performed, the AS (RRC) function 14 determines "Barring absent" in step S205.

Returning to Fig. 3, upon determination "Barring present" in step S107, the AS (RRC) function 14 determines that the originating call request that occurred in step S101 is barred, in step S110.

On the other hand, upon determination "Barring absent" in step S107, the AS (RRC) function 14 determines that the originating call request that occurred in step S101 is not barred, in step S109.

Furthermore, upon determination in step S104 that the "ac-Barring For Normal MTC-roaming" is not notified by the broadcast information, the AS (RRC) function 14 determines that the originating call request that occurred in step S101 is not barred, in step S109.

Upon determination in step S102 that the mobile terminal UE belongs to the "Low Priority MTC", the AS (RRC) function 14 determines whether or not the mobile terminal UE is in the "normal state" or the "roaming state", in step S111.

Upon determination in step S111 that the mobile terminal UE is in the "normal state", the AS (RRC) function 14 determines whether or not the "ac-Barring for Low Priority MTC" is notified by the broadcast information, in step S112.

Upon determination in step S112 that the "ac-Barring for Low Priority MTC" is notified by the broadcast information, the AS (RRC) function 14 performs the barring determination illustrated in Fig. 4, in step S114.

As illustrated in Fig. 4, according to the barring determination, the AS (RRC) function 14 determines whether or not the mobile terminal UE includes any one of ACs 11 through 15, in step S201.

Upon determination in step S201 that the mobile terminal UE includes any one of ACs 11 through 15, the AS (RRC) function 14 determines whether or not an access barring is performed by the "ac-Barring for Low Priority MTC" for all of the ACs 11 through 15 included in the mobile terminal UE, in step S202.

Upon determination in step S202 that an access barring is performed, the AS (RRC) function 14 determines "Barring present" in step S206.

On the other hand, upon determination in step S201 that the mobile terminal UE does not include any one of ACs 11 through 15, the AS (RRC) function 14 compares a random number rand and the value set in the "ac-Barring Factor" included in the "ac-Barring For Low Priority MTC", in step S203.

Upon determination in step S203 that the random number rand is smaller than the value set in the "ac-Barring Factor" included in the "ac-Barring For Low Priority MTC", the AS (RRC) function 14 determines "Barring absent" in step S205.

On the other hand, upon determination in step S203 that the random number rand is larger than the value set in the "ac-Barring Factor" included in the "ac-Barring For Low Priority MTC", the AS (RRC) function 14 sets and starts the T303 timer in step S204, and then determines "Barring present" in step S206.

Furthermore, upon determination in step S202 that an access barring is performed, the AS (RRC) function 14 determines "Barring absent" in step S205.

Returning to Fig. 3, upon determination "Barring present" in step S 114, the AS (RRC) function 14 determines that the originating call request that occurred in step S101 is barred, in step S116.

On the other hand, upon determination "Barring absent" in step S114, the AS (RRC) function 14 determines that the originating call request that occurred in step S101 is not barred, in step S117.

Furthermore, upon determination in step S112 that the "ac-Barring For Low Priority MTC" is not notified by the broadcast information, the AS (RRC) function 14 determines that the originating call request that occurred in step S101 is not barred, in step S117.

Upon determination in step S111 that the mobile terminal UE is in the "roaming state", the AS (RRC) function 14 determines whether or not the "ac-Barring For Low Priority MTC-roaming" is notified by the broadcast information, in step S113.

Upon determination in step S113 that the "ac-Barring For Low Priority MTC-roaming" is notified by the broadcast information, the AS (RRC) function 14 performs the barring determination illustrated in Fig. 4, in step S115.

As illustrated in Fig. 4, according to the barring determination, the AS (RRC) function 14 determines whether or not the mobile terminal UE includes any one of ACs 11 through 15, in step S201.

Upon determination in step S201 that the mobile terminal UE includes any one of ACs 11 through 15, the AS (RRC) function 14 determines whether or not an access barring is performed by the "ac-Barring for Low Priority MTC-roaming" for all of the ACs 11 through 15 included in the mobile terminal UE, in step S202.

Upon determination in step S202 that an access barring is performed, the AS (RRC) function 14 determines "Barring present" in step S206.

On the other hand, upon determination in step S201 that the mobile terminal UE does not include any one of ACs 11 through 15, the AS (RRC) function 14 compares a random number rand and the value set in the "ac-Barring Factor" included in the "ac-Barring For Low Priority MTC-roaming", in step S203.

Upon determination in step S203 that the random number rand is smaller than the value set in the "ac-Barring Factor" included in the "ac-Barring For Low Priority MTC-roaming", the AS (RRC) function 14 determines "Barring absent" in step S205.

On the other hand, upon determination in step S203 that the random number rand is larger than the value set in the "ac-Barring Factor" included in the "ac-Barring For Low Priority MTC-roaming", the AS (RRC) function 14 sets and starts the T303 timer in step S204, and then determines "Barring present" in step S206.

Furthermore, upon determination in step S202 that an access barring is performed, the AS (RRC) function 14 determines "Barring absent" in step S205.

Returning to Fig. 3, upon determination "Barring present" in step S115, the AS (RRC) function 14 determines that the originating call request that occurred in step S101 is barred, in step S118.

On the other hand, upon determination "Barring absent" in step S115, the AS (RRC) function 14 determines that the originating call request that occurred in step S101 is not barred, in step S117.

Furthermore, upon determination in step S113 that the "ac-Barring For Low Priority MTC-roaming" is not notified by the broadcast information, the AS (RRC) function 14 determines that the originating call request that occurred in step S101 is not barred, in step S117.

It must be noted that the order may be interchanged between the operation of step S102 and the operation of step S103/S111.

Furthermore, before reaching step S109 and S117, the AS (RRC) function 14 confirms whether or not the "ac-Barring For MO-Data" or the "ac-Barring For MO-Signaling" is being broadcasted, and if the information is being broadcasted, the AS (RRC) function 14 may again perform barring determination based thereupon.

Specifically, if "No" is determined in step S104, S105, S112, and S 113, the AS (RRC) function 14 confirms whether or not the "ac-Barring For MO-Data" or the "ac-Barring For MO-Signaling" is being broadcasted, and if the information is being broadcasted, the AS (RRC) function 14 may again perform barring determination based thereupon.

Alternatively, if "Barring absent" is determined in steps S106, S107, S114, and S115, the AS (RRC) function 14 confirms whether or not the "ac-Barring For MO-Data" or the "ac-Barring For MO-Signaling" is being broadcasted, and if the information is being broadcasted, the AS (RRC) function 14 may again perform barring determination based thereupon.

Furthermore, in the present embodiment, the AS (RRC) function 14 performed the determination as to which the AS (RRC) function 14 belonged to the "normal state" or the "roaming state", however, the NAS function 13 may perform the determination, and notify the determination result to the AS (RRC) function 14.

Furthermore, when the ACs 11 through 15 retained in the USIM 12 are effective, the barring determination concerning the "ac-Barring For Special AC" included in the "ac-Barring For MO-Data" or the "ac-Barring For MO-Signaling" is executed prior to the barring determination concerning the "ac-Barring For Normal MTC", the "ac-Barring For Low Priority MTC", the "ac-Barring For Normal MTC-roaming", and the "ac-Barring For Low Priority MTC-roaming", and as a result, if "Barring absent" is determined, the barring determination concerning the "ac-Barring For Normal MTC", the "ac-Barring For Low Priority MTC", the "ac-Barring For Normal MTC-roaming", and the "ac-Barring For Low Priority MTC-roaming" may be omitted, and "Barring absent" may be determined finally. Whether or not the ACs 11 through 15 retained in the USIM 12 are effective is determined based on whether or not the ACs 11 through 15 are camping on HPLMN.

According to the mobile communication system of the first embodiment of the present invention, by using the "ac-Barring For Normal MTC", the "ac-Barring For Low Priority MTC", the "ac-Barring For Normal MTC-roaming", and the "ac-Barring For Low Priority MTC-roaming", the method of access barring can be changed between an MTC device that is in a roaming state and an MTC device that is in a normal state.

The characteristics of the present embodiment as described above may be expressed as follows.

A first characteristic of the present embodiment is summarized as a mobile communication system having a mobile terminal UE and a radio base station eNB, and in a subordinate cell, the radio base station eNB is configured to be able to notify, by the broadcast information, "ac-Barring For Normal MTC (first access information for normal state)" for barring an access by a mobile terminal UE of "Normal MTC (first type)" that is in a normal state; "ac-Barring For Low Priority MTC (second access information for normal state)" for barring an access by a mobile terminal UE of "Low Priority MTC (second type)" that is in a normal state; "ac-Barring For Normal MTC-roaming (first access information for roaming state)" for barring an access by a mobile terminal UE of the "Normal MTC" that is in a roaming state; and "ac-Barring For Low Priority MTC-roaming (second access information for roaming state)" for barring an access by a mobile terminal UE of the "Low Priority MTC" that is in a roaming state, and the mobile terminal UE is configured to determine whether or not an access is barred, on the basis of an access class (AC) of the mobile terminal UE; which one of the "Normal MTC" and the "Low Priority MTC" the mobile terminal UE belongs to; which one of the normal state and the roaming state the mobile terminal UE is in; and which one of the "ac-Barring For Normal MTC", the "ac-Barring For Low Priority MTC", the "ac-Barring For Normal MTC-roaming", and the "ac-Barring For Low Priority MTC-roaming" is notified.

A second characteristic of the present embodiment is summarized as a mobile terminal UE that determines whether or not an access is barred, on the basis of an access class (AC) of the mobile terminal UE; which one of the "Normal MTC" and the "Low Priority MTC" the mobile terminal UE belongs to; which one of the normal state and the roaming state the mobile terminal UE is in; and which one of the "ac-Barring For Normal MTC", the "ac-Barring For Low Priority MTC", the "ac-Barring For Normal MTC-roaming", and the "ac-Barring For Low Priority MTC-roaming" is notified.

According to the second characteristic of the present embodiment, the mobile terminal UE includes an AS (RRC) function 14, an NAS function 13, and a USIM 12; and the AS (RRC) function 14 is configured to acquire from the USIM 12 an access class (AC) of the mobile terminal UE; the AS (RRC) function 14 is configured to acquire type information, from the NAS function 13, indicating which one of the "Normal MTC" and the "Low Priority MTC" the mobile terminal UE belongs to; the AS (RRC) function 14 is configured to receive the broadcast information; and the AS (RRC) function 14 may be configured to perform the above determination.

According to the first and second characteristics of the present embodiment, the normal state may be a state when the mobile terminal UE is registered in the HPLMN (home network), or a state when the identification information of the HPLMN is included in the broadcast information of the above cell, and the roaming state may be a state when the mobile terminal UE is not registered in the HPLMN, or a state when the identification information of the HPLMN is not included in the broadcast information of the above cell.

In addition, the operation of the above-mentioned radio base station eNB or mobile station UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the radio base station eNB and the mobile station UE. Furthermore, such a storage medium and processor may be arranged in the radio base station eNB and the mobile station UE as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

### [Reference Signs List]

- eNB: Radio base station
- UE: Mobile terminal
- 11: Setting unit
- 12: USIM
- 13: NAS function
- 14: AS (RRC) function

## Claims

1. A mobile communication system comprising a mobile terminal and a radio base station, wherein
in a subordinate cell, the radio base station is configured to be able to notify, by the broadcast information, first access information for normal state for barring an access by a mobile terminal of a first type that is in a normal state; second access information for normal state for barring an access by a mobile terminal of a second type that is in a normal state; first access information for roaming state for barring an access by a mobile terminal of a first type that is in a roaming state; and second access information for roaming state for barring an access by a mobile terminal of a second type that is in a roaming state, and
the mobile terminal is configured to determine whether or not an access is barred, on the basis of an access class of the mobile terminal; which one of the first type and the second type the mobile terminal belongs to; which one of the normal state and the roaming state the mobile terminal is in; and which one of the first access information for normal state, the second access information for normal state, the first access information for roaming state, and the second access information for roaming state is notified.

2. The mobile communication system according to claim 1, wherein
the normal state is a state when the mobile terminal is registered in a home network, or a state when the identification information of the home network is included in the broadcast information of the cell, and
the roaming state is a state when the mobile terminal is not registered in a home network, or a state when the identification information of the home network is not included in the broadcast information of the cell.

3. A mobile terminal, wherein
the mobile terminal is configured to determine whether or not an access is barred, on the basis of an access class of the mobile terminal; which one of a first type and a second type the mobile terminal belongs to; which one of a normal state and a roaming state the mobile terminal is in; and which one is notified by the broadcast information: first access information for normal state for barring an access by a mobile terminal of a first type that is in a normal state, second access information for normal state for barring an access by a mobile terminal of a second type that is in a normal state, first access information for roaming state for barring an access by a mobile terminal of a first type that is in a roaming state, and second access information for roaming state for barring an access by a mobile terminal of a second type that is in a roaming state.

4. The mobile terminal according to claim 3, wherein
the normal state is a state when the mobile terminal is registered in a home network, or a state when the identification information of the home network is included in the broadcast information of the cell, and
the roaming state is a state when the mobile terminal is not registered in a home network, or a state when the identification information of the home network is not included in the broadcast information of the cell.

5. The mobile terminal according to claim 3 or 4, wherein
the mobile terminal comprise an AS (RRC) function, a NAS function, and a Universal Subscriber Identification Module;
the AS (RRC) function is configured to acquire an access class of the mobile terminal from the Universal Subscriber Identification Module;
the AS (RRC) function is configured to acquire type information, from the NAS function, indicating which one of the first type and the second type the mobile terminal belongs to;
the AS (RRC) function is configured to receive the broadcast information; and
the AS (RRC) function is configured to perform the above determination.
